# EUROPEAN PATENT SPECIFICATION

(11) **EP 1 454 708 B1**
(45) Date of publication and mention of the grant of the patent: **21.01.2009**
(21) Application number: 04425121.3
(22) Date of filing: 26.02.2004
(51) Int. Cl.: B23P 15/00, E05B 17/00

(54) **Apparatus for making operating units for doors or windows**
Vorrichtung zur Herstellung von Bedieneinheiten für Türen oder Fenster
Dispositif pour la fabrication d'unités de commande pour portes ou fenêtres

(30) Priority: 05.03.2003 IT BO20030119
(43) Date of publication of application: 08.09.2004
(73) Proprietor: GSG INTERNATIONAL S.p.A., 40054 Budrio (Bologna) (IT)
(72) Inventor: Lambertini, Marco, 40068 San Lazzaro Di Savena (Bologna) (IT)
(74) Representative: Lanzoni, Luciano

(56) References cited:
- EP-A- 0 124 763
- EP-A- 0 517 552
- EP-A- 1 132 169
- EP-A- 1 232 830
- DE-A1- 19 906 758
- DE-A1- 19 909 400
- DE-U1- 20 015 094
- FR-A- 2 664 932
- US-A- 4 694 974
- US-A- 4 930 212
- US-A- 4 934 043

## Description

The present invention relates to an apparatus for making accessory elements for door or window frames according to the preamble of claim 1. Such an apparatus is known from EP-A-1232830.

At present, in the field of doors and windows with metal frames, especially but not restricted to, doors and windows that can be opened by tilting or turning, operation of the door or window requires a plurality of accessory elements applied to both the fixed frame and the mobile frame of the door or window.

One of the main accessories is the operating unit which enables the mobile frame of the door or window to be positioned in its different configurations (namely, turn opened, tilt opened or closed) upon actuation of a handle located on the outside surface of the mobile frame itself.

The operating unit usually consists of a pair of rod segments (each, in practice, being a length of flat metal profile) joined to each other by a connecting element, or "drive rod", as it is called in the jargon of the trade, positioned between the two segments and attached to them using pins which are normally present on the drive rod and which may be inserted in the holes in the corresponding ends of the segments.

The two metal segments also have other seats or holes, made close to the ends opposite those attached to the drive, for their connection, during frame assembly, to the moving parts which open and close the mobile frame (push bolts or lock terminals) and to drive elements (such as corner drives) for tilt opening of the mobile frame.

The operating unit structured in this way is obtained using a method according to which the rod segments are made by a special cutting machine from a metal profile, with a suitably shaped cross-section, which can be attached with a matching fit in a channel present on the frame profile.

The length of the segments depends on the dimensions (height) of the mobile frame in which they will be inserted. Once cut, the segments are further machined to create the seats and/or holes mentioned, which are needed in order to connect them to the drive rod and to the opening/closing and drive elements.

Following this machining, the segments are assembled in succession, each being attached to the operating elements until assembly on the frame profile is complete.

In another solution, the operating unit is made from a single rod of the same height as the door or window frame to which it has to be fitted and the accessories may be assembled directly on the rod before the latter is inserted into the sliding channel of the mobile frame (see Italian patent applications BO2000A000117 and BO2001A000080 by the same Applicant as the present).

According to those patent applications, the operating unit is made using an apparatus that comprises at least the following:
- a first station for feeding a profile in a working direction and having a cross-section that makes a matching fit with the sliding channel; and
- a second station for working the continuous profile and designed at least to cut a portion of the continuous profile to a predetermined length.

More specifically, the second station for working the continuous profile portion comprises means for working the profile so as to at least form and/or attach drive means and locking and/or operating means.

The above apparatus, created to optimise the time required to make the units and the elements to be assembled, has formed the subject matter of numerous studies and improvements by the Applicant with a view to further reducing working time and, above all, to reduce the number of elements to be applied to the rod, so as to save on warehousing and thus reduce production costs.

The present invention therefore has for an aim to provide an apparatus for making operating units for doors or window frames, especially metal frames, that is extremely fast, economical as a whole, and applies a limited number of elements to the rod, while at the same time maintaining the quality of the end product at a high level.

According to the invention, this aim is achieved by an apparatus for making accessory elements for door or window frames according to claim 1. Preferred embodiments, are described in the dependent claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic front view of an operating rod made with the apparatus according to the present invention;
- Figure 2 is a perspective view of the apparatus, according to the present invention, for making operating units for doors or windows;
- Figure 3 is an enlarged schematic side view, with some parts cut away in order to better illustrate others, of the apparatus shown in Figure 2;
- Figure 4 is a schematic front view, with some parts cut away in order to better illustrate others, of the apparatus shown in the illustrations listed above in a first working position;
- Figure 5 is a schematic front view, with some parts cut away in order to better illustrate others, of the apparatus shown in Figure 4, in a second working position;
- Figure 6 is a perspective view, with some parts cut away in order to better illustrate others, of a detail inside the apparatus shown in the illustrations listed above, namely, a matrix and a feeder;
- Figures 7 to 14 are schematic side views illustrating a succession of steps in the production of the operating rod made using the apparatus according to the invention;
- Figures 15 to 17 are schematic top plan views showing a pin feeder in respective operating steps corresponding to the steps in the operation of the apparatus shown in Figures 7 to 14;
- Figure 18 is a front view of a pin feeder forming part of the apparatus according to the invention;
- Figure 19 is a partial top plan detail view showing a base plate located under the pin feeder in the apparatus shown in the illustrations listed above.

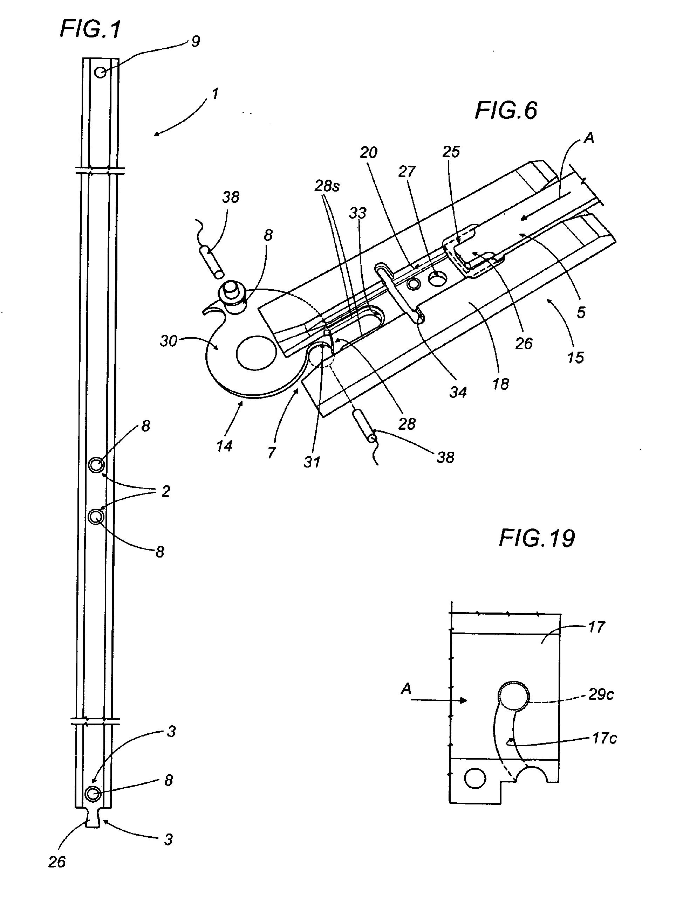

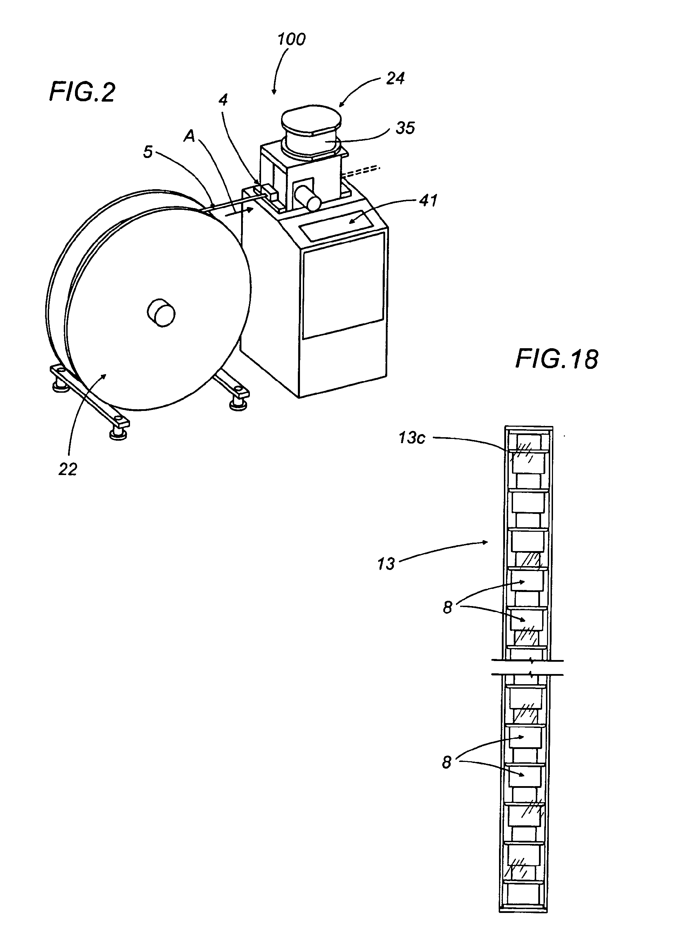

With reference to the accompanying drawings, in particular Figures 1 and 2, the apparatus according to the invention, denoted in its entirety by the numeral 100, is used for making accessory elements for door or window frames (not illustrated since they are well within the knowledge of those familiar with the trade) comprising a profile constituting a channel in which there slides and/or there is coupled at least one operating rod 1 for a handle assembly which acts in conjunction with drive means 2 to make the operating rod 1 slide in both directions along the channel. The operating rod is also equipped with locking and/or operating elements 3 actuated by the handle assembly. The elements 3 are described in further detail below.

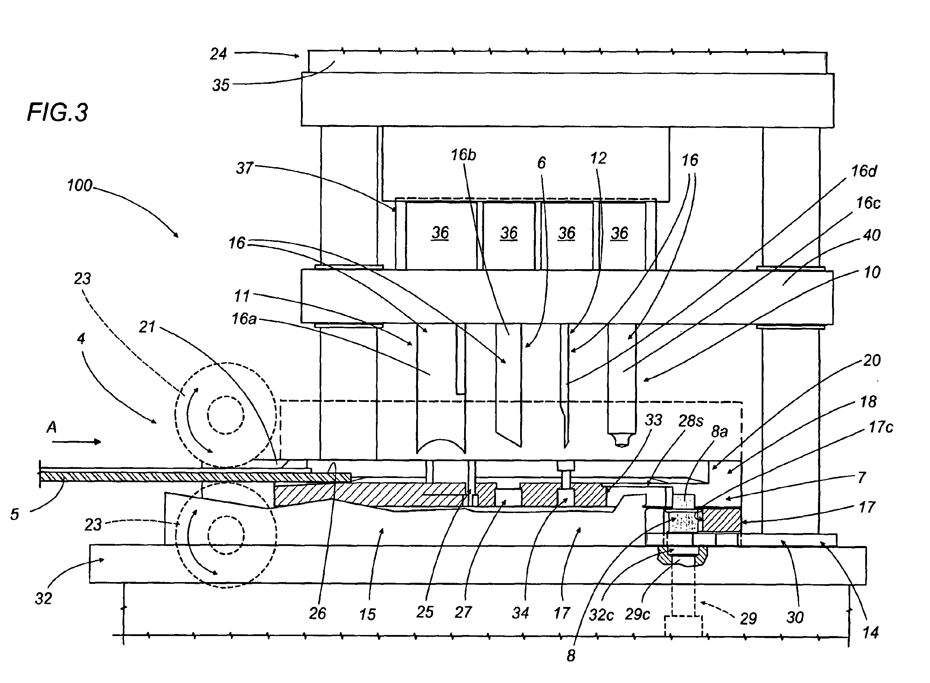

As illustrated in Figures 3 to 6, the apparatus 100 essentially comprises:
- a first station 4 for feeding a profile 5 in a working direction (indicated by the arrow A) and having a cross-section that makes a matching fit with the sliding channel in the door or window frame;
- a perforating station 6 for making a plurality of features in the profile 5 so as to form at least a part of the locking and/or operating elements 3;
- a station 7 for inserting a plurality of pins 8 into respective holes 9 made in the profile 5 by the perforating station 6;
- a station 10 for fixing each pin 8 in the respective hole 9 to form a drive element 2 or a locking and/or operating element 3.

In addition to the stations listed above, the apparatus 100 may comprise:
- a station 11 for punching the profile 5 to make features in the profile 5 forming at least a part of the locking and/or operating elements 3;
- a station 12 for separating or cutting a portion of the profile 5 to a predetermined length to form an operating rod 1.

In other terms, the apparatus 100 may comprise the aforementioned stations one after the other in the working direction A, according to the following configuration (purely by way of example): the feed station 4; the punching station 11; the perforating station 6; the separating or cutting station 12; the fixing station 10; and the station 7 for inserting the pins 8.

The feed station 4, punching station 11, perforating station 6, separating station 12, fixing station 10 and insertion station 7 each consist of a lower unit 15 for positioning and moving the profile 5 and the pins 8 and a corresponding plurality of working means 16 located above a surface on which the profile 5 is fed in the direction A and opposite the lower unit 15.

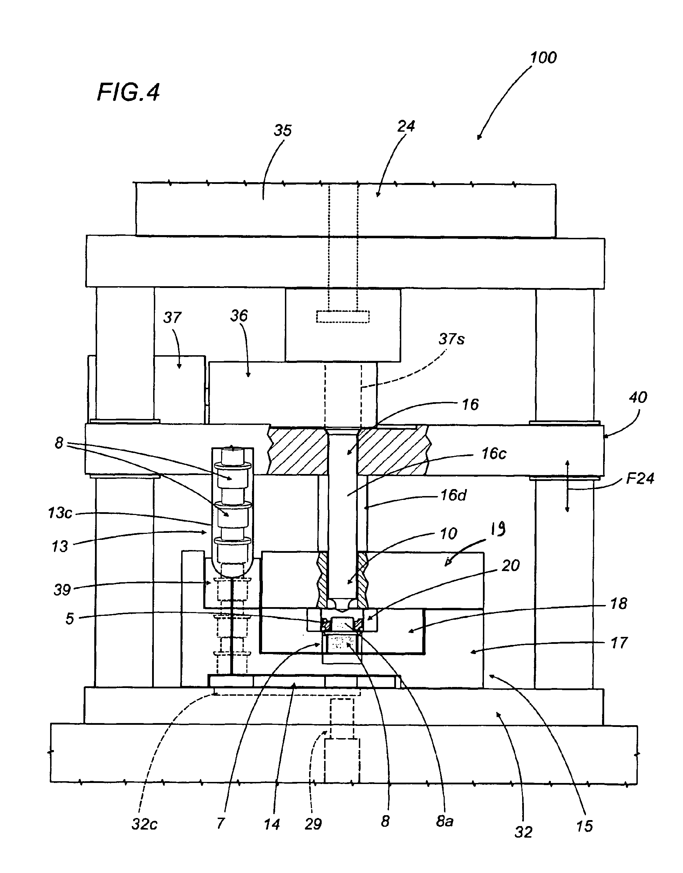

As illustrated in Figures 4, 5 and 18, close to the insertion station 7, there is a magazine 13 for the pins 8, the magazine being equipped with means 14 for extracting the pins 8 one by one and feeding them to the insertion station 7.

The magazine 13 may consist of a self-contained cylindrical cartridge 13c containing a plurality of pins 8 placed one after the other. The cartridge 13c can be inserted quickly and easily into a cylindrical fitting 39 made close to the insertion station 7 and designed to position one pin 8 at a time in a zone for extracting the pins 8, which are gravity fed (as described in more detail below).

More specifically, the cartridge 13c consists of a self-contained transparent cylinder with a predetermined number of pins 8 inside it and replaceable by another similar cartridge 13c when the pins 8 in the first cartridge 13c are finished. Looking more closely at the constructional details, with reference to Figures 3, 4, 5 and 6, at least the aforementioned lower unit 15 comprises a base plate 32, a base cradle 17 housing an intermediate matrix 18, and an upper element 19 for closing and guiding the aforementioned working means 16.

As clearly shown in Figure 6, the matrix 18 has a central channel 20 through which the profile 5 to be machined passes in the working direction A, forming the feed surface.

The feed station 4 may comprise a guide 21 for the passage of the profile 5 fed in by a cartridge 22, and a pair of power-driven opposing rollers 23 located upstream of the guide 21 in the working direction A and between which the profile 5 to be fed to the other stations 11, 6, 12, 10, 7 is interposed.

In the example shown in Figure 2, the profile 5 is of the continuous type, made of a synthetic material, and is rolled up on the cartridge 22 outside the apparatus 100.

The aforementioned punching station 11 comprises a first vertical bit 16a associated with drive means 24 and mobile (see arrows F16a) towards and away from the matrix 18 which, at the working area of the first bit 16a, has an opening 25 on the central channel 20, this opening being shaped to match the shape of the cutting edge of the first bit 16a so that the latter, when activated, forms a tapered feature 26 on the profile 5 constituting a stop and operating element on the rod 1.

Similarly, the perforating station 6 comprises a second vertical bit 16b, with circular cross section, associated with drive means 24 and mobile (see arrow F16b) towards and away from the matrix 18 which, at the working area of the second bit 16b, has a circular opening 27, which, when the second bit 16b is activated, makes a circular hole 9 through the profile 5.

The hole 9 may be used as a seat for a pin 8 or it may be left free and used later for fitting the operating elements when the rod 1 is mounted on the frame.

The insertion station 7, located downstream of the matrix 18 in the working direction A, comprises:
- the aforementioned means 14 for extracting and feeding one pin 8 at a time from an extraction position, where the pin 8 is inside the magazine 13 (see Figure 6), to a working position, where the pin 8 has moved in the working direction A and is located under an open seat 28 made in the matrix 18 and constituting the feed channel 20;
- drive means 29 for moving the pin 8 vertically from a lowered working position to a raised position (see arrows F29) where the pin 8 itself is inserted into a hole 9 made in the profile 5 and positioned above the pin 8 (thanks to the coordinated motion of the aforementioned pair of power-driven rollers 23).

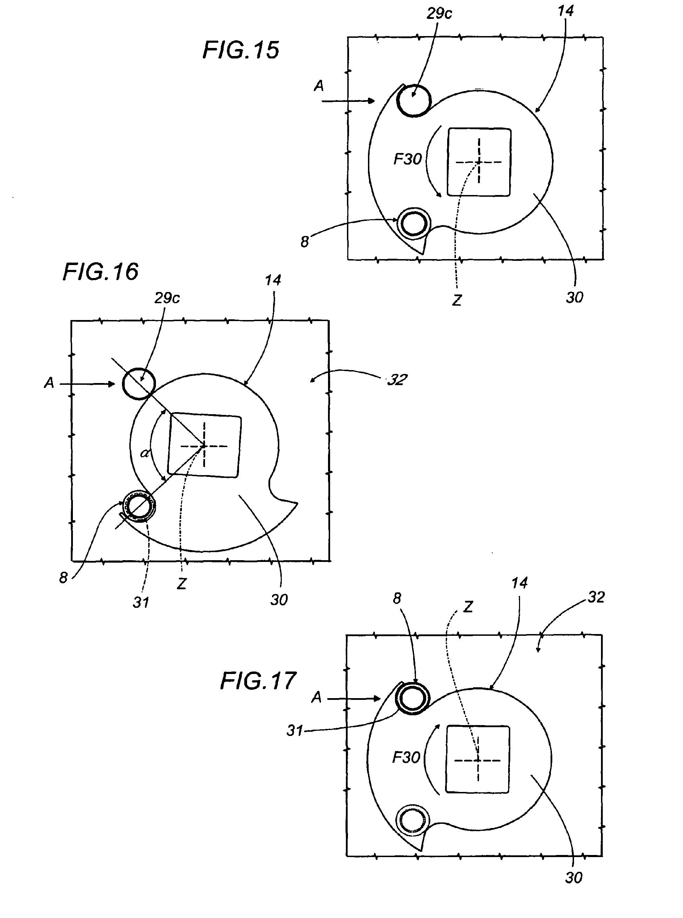

As illustrated in Figures 6 and from 15 to 17, the extraction and feed means 14 comprise a circular plate or feeder plate 30 located under the matrix 18 and presenting, on a part of its circumference, an indentation 31 for intercepting a single pin 8 when the plate 30 rotates (see arrows F30) about its vertical axis Z between:
- the aforementioned extraction position, where the indentation 31 is at the magazine 13 (see Figure 16) to catch and position the pin 8; and
- the aforementioned working position where the circular plate 30 has been rotated through an angle α, thus moving the pin 8 to the aforementioned open seat 28 (see Figures 6, 15 and 17).

The next pin 8 waiting to be fed from the magazine 13 to the open seat 28 is positioned over the plate 30 (see Figures 3, 6 and 15) and is held in this position both by the cylindrical fitting 39 and by the thickness of the plate 30, thanks also to a movement of the latter.

When the plate 30 turns to the extraction position, the pin 8 moves down further thanks not only to the indentation 31 in the plate 30 but also to the presence of a guide channel 32c made in the base plate 32 and a related guide channel 17c made in the cradle 17 (see Figure 19). This downward movement enables the pin 8 to come free of the cylindrical fitting 39 and to be fed to the open seat 28.

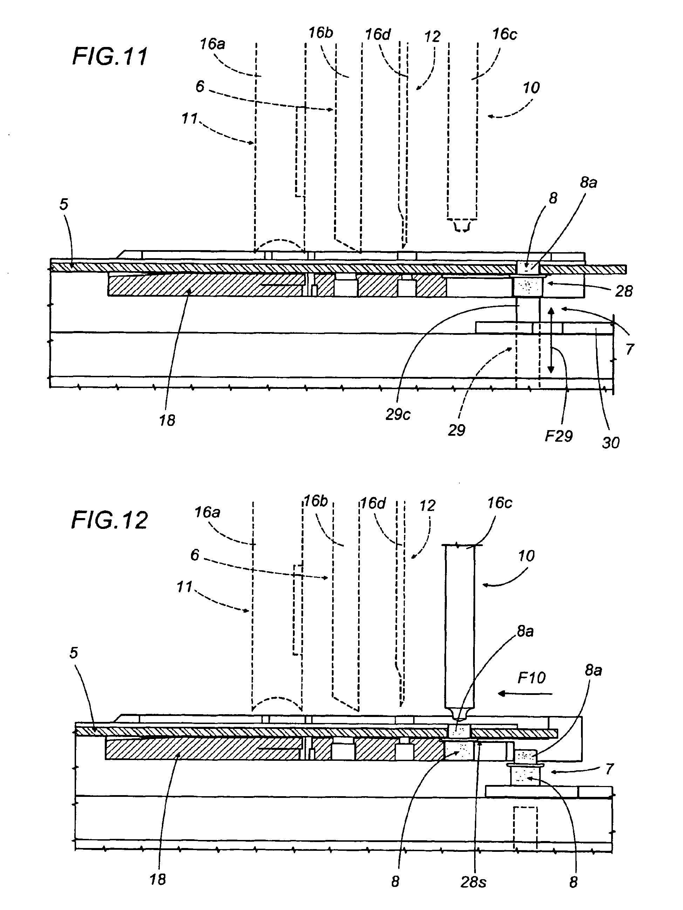

As illustrated in Figures 3, 4 and 5, the vertical drive means 29 comprise a pushing cylinder 29c located under the base plate 32 and mobile between a retracted idle position where the cylinder 29c is under the base plate 32, and a raised working position with the pin 8 on it in such manner as to insert the pin 8 into a hole 9 in the profile 5 (see Figure 11 and arrow F29).

To enable activation of all the above mentioned means, the insertion station 7 may be equipped with sensors 38 for detecting the pins 8 at the magazine 13 and at the open seat 28 in the matrix 18 (see Figure 6).

The next station, namely the fixing station 10 comprises a third vertical bit 16c associated with drive means 24 and mobile (see arrows F16a) towards and away from the matrix 18 which, at the working area of the third bit 16c, has an open slot-like seat 33 forming a passage that supports the pin 8 in a respective hole 9 in the profile 5 downstream of the fixing station 10 in the working direction A.

The third bit 16c has a wedge-shaped working edge enabling the pin 8 to be fixed in place by deforming a part 8a of it that protrudes upwards from the profile 5 when the latter is withdrawn (see arrow F10) from the insertion station 7 to the fixing station 10.

This withdrawal does not affect the position of the pin 8 inside the hole 9, since the open slot-like seat 28 in the matrix 18 has an undercut 28s made in the edge of the seat 28 itself and designed to support the bottom of the pin 8 during withdrawal from the insertion station 7 to the fixing station 10.

Lastly, the cutting station 12, located between the perforating station 6 and the fixing station 10, comprises a fourth vertical cutting bit 16d associated with drive means 24 and mobile (see arrows F16d) towards and away from the matrix 18 which, at the working area of the fourth bit 16d, has a slot-like seat 34 extending transversally to the working direction A and designed to separate the part of the profile 5 forming a finished rod 1 from the remaining portion of the continuous profile 5.

The means 24 for driving the aforementioned bits 16a, 16b, 16c, 16d comprise a single actuating element 35 which moves the bits 16a, 16b, 16c, 16d up and down.

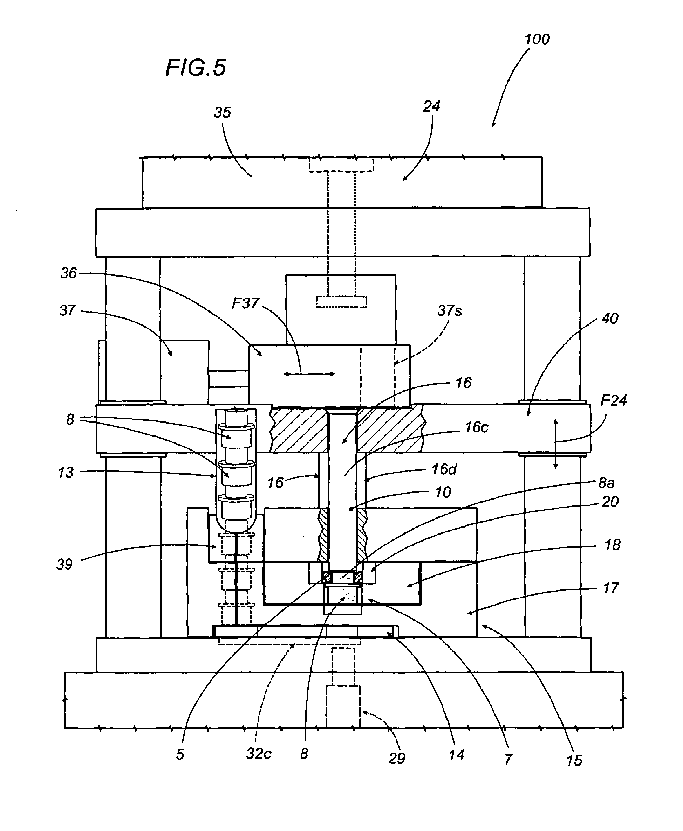

Between each of the bits 16a, 16b, 16c, 16d and the actuator 35 there are interposed blocks 36 for selectively moving the bits 16a, 16b, 16c, 16d individually through a drive control unit 37 between a selected working position in which the block 36 pushes the respective bit 16a, 16b, 16c, 16d (see Figure 5) so that the bit 16a, 16b, 16c, 16d performs a working movement towards the profile 5, and a selected idle position in which the block 36 positions at the respective bit 16a, 16b, 16c, 16d a matching seat 37s through which the bit 16a, 16b, 16c, 16d can slide freely (see arrows F37 and Figure 4).

Thus, the lowering of the entire assembly of selection blocks 36 and of a plate 40 for mounting the bits 16a, 16b, 16c, 16d (see arrow F24) causes only the bit required in each case to be pushed towards the profile 5.

The control unit 37 for driving the selection blocks 36, the motor for driving the two rollers 23 that feed the profile 5, the actuator 35 and the cylinder 29c are controlled by a central microprocessor unit 41 (illustrated as a block Figure 2) which enables machining to be carried out according to predetermined sequences depending on data entered by the operator, such as, for example, the total length of the rod 1, the height of the door or window frame to which the rod is to be applied, the type of locking and operating elements, and so on.

Preferably, the movements of the control unit 37, of the actuator 35 and of the cylinder 29c are accomplished by electropneumatic devices.

An apparatus made as described above works in the following manner, starting from an initial configuration such as that illustrated in Figure 3 and after the operator has entered the required data in the central microprocessor unit 41.

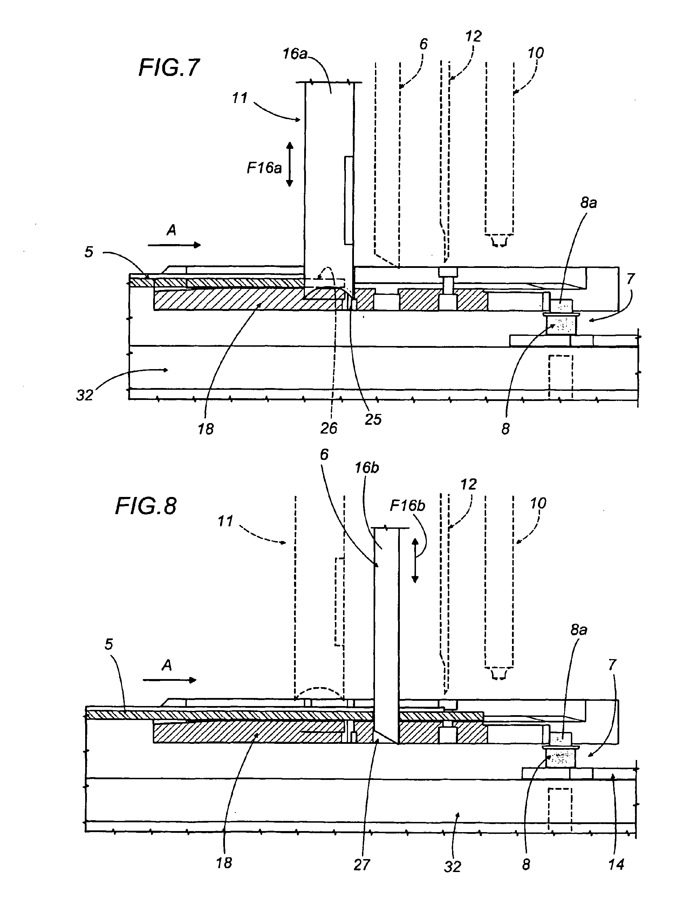

On activating the apparatus, the two rollers 23 feed the profile 5 until the end of it is positioned at the punching station 11 where the first bit 16a is activated and moves down to make a tapered feature 26 defining a locking and operating element (see Figures 6 and 7).

Next, the profile 5 is fed in the working direction A until a predetermined part of it is positioned at the perforating station 6 where the second bit 16b is activated and makes a hole 9 in it (see Figure 8).

At this point, if this hole 9 is to be used for a respective pin 8, the rollers 23 feed the profile 5 until the hole 9 is positioned above the lift cylinder 29c.

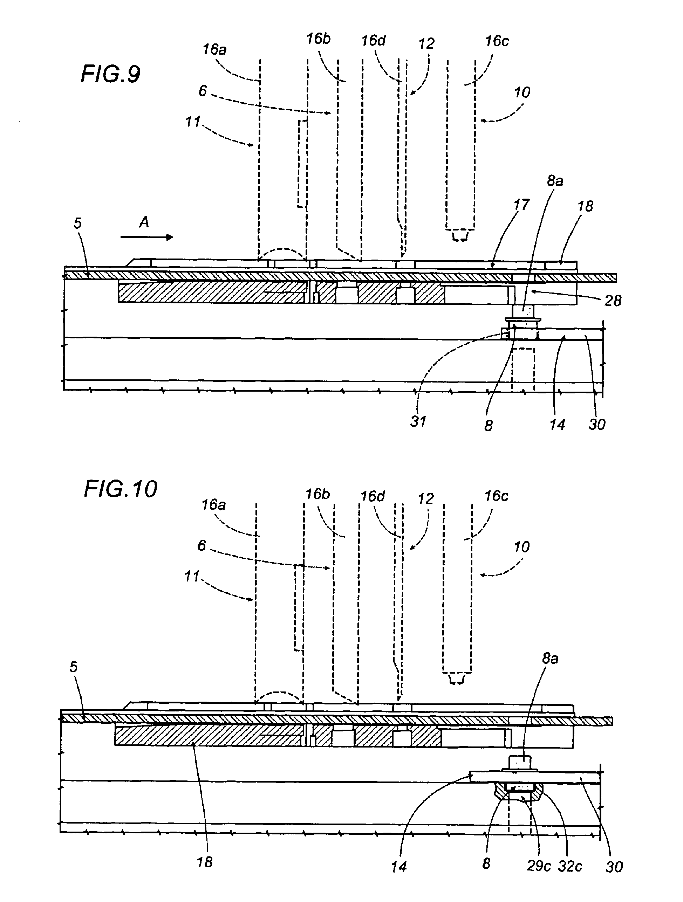

While this positioning is taking place, the circular plate 30 (in the idle position illustrated in Figure 15) turns until the indentation 31 in it intercepts the pin 8 waiting in the magazine 13 (see Figure 16) and then feeds the pin to the cylinder 29c (see Figures 10 and 17).

The cylinder 29c is now activated and lifts the pin 8 to partly insert it into the hole 9 (see Figure 11).

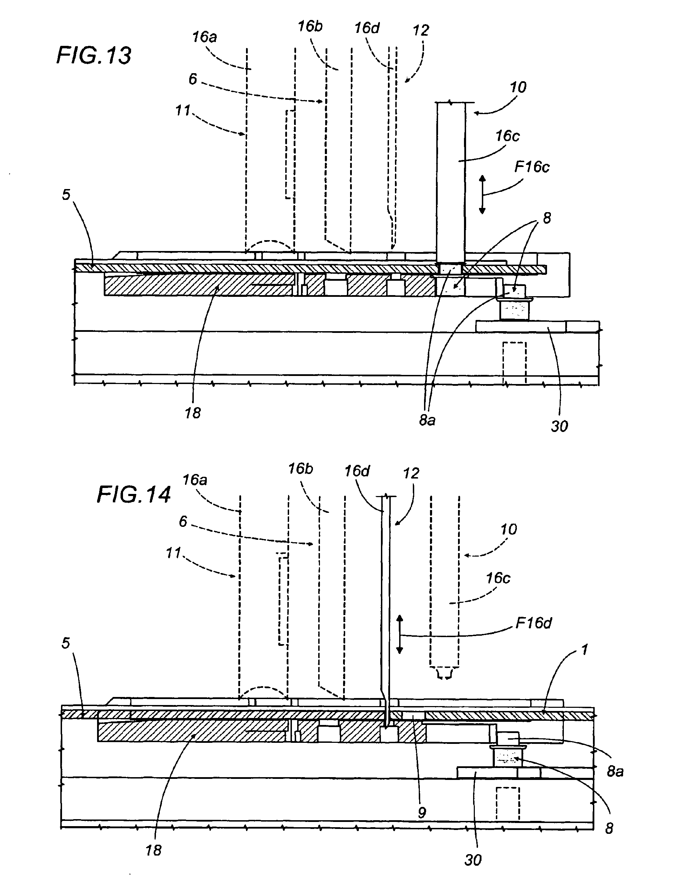

After insertion, the rollers 23 withdraw the profile 5 to the point at the end of the open seat 28 in the matrix 18 where the third bit 16c is activated to deform a part of the pin 8 in such a way as to fix the pin 8 in the profile 5(see Figure 13).

The steps of perforating the profile and positioning another pin 8 (if necessary) as described above, are repeated as often as required to give the rod 1 its final form.

When all these operations have been completed, the end of the rod 1 is positioned at the separating station 12 where the fourth bit 16d cuts the worked rod 1 from the remainder of the profile 5 (see Figure 14).

Obviously, this operation is not necessary if the rod when working a single profile that has already of the required length.

An apparatus made as described above achieves the aforementioned aims thanks to its extremely compact structure, the use of only one accessory element to be applied, namely the pins, and its extremely fast working speed.

The presence of only two cartridges (rod and pins) makes working very flexible, allowing the production not only of full-length rods but also of simplified rod segments, giving the door and window frame installer the possibility of obtaining a full range of finished items using a single machine and without requiring further work on the rods made.

The use of pins only reduces the number of parts that the installer needs to stock, thus allowing considerable savings.

## Claims

1. An apparatus for making accessory elements for door or window frames comprising a profile constituting a channel in which there slides and/or there is coupled at least one operating rod (1) for a handle assembly which acts in conjunction with drive means (2) to make the operating rod (1) slide in both directions along the channel; the operating rod (1) being also equipped with locking and/or operating elements (3) actuated by the handle assembly; the apparatus comprising:
- a station (4) for feeding a profile (5) in a working direction (A) and having a cross-section that makes a matching fit with the sliding channel;
- a station (6) for perforating the profile (5) to make a plurality of holes in the profile (5);
the apparatus being **characterised in that** it further comprises:
- a station (7) for inserting a plurality of pins (8) into respective holes (9) made in the profile (5) by the perforating station (6);
- a station (10) for fixing each pin (8) in the respective hole (9) to form a drive element (2) or a locking and/or operating element (3);
- a magazine (13) for the pins (8) close to the insertion station (7) and equipped with means (14) for extracting the pins (8) one by one and feeding them to the insertion station (7);
- the feed station (4) the perforating station (6) the fixing station (10) and the insertion station (7) consisting of a lower unit (15) for positioning and moving the profile (5) and the pins (8) and of a corresponding plurality of working means (16) located above a surface on which the profile (5) is fed in the direction (A) and opposite the lower unit (15);
- the lower unit (15) comprising a base plate (32), a base cradle (17) housing an intermediate matrix (18), and an upper element (19) for closing and guiding said working means (16);
- the extraction and feed means (14) comprising a circular plate (30) located under the matrix (18) and presenting, on a part of its circumference, an indentation (31) for intercepting a single pin (8) when the plate (30) rotates about its vertical axis (Z) between an extraction position, where the indentation (31) is at the magazine (13) to catch and position the pin (8) and a working position where the circular plate (30) has been rotated through an angle (α) to move the pin (8) to an open seat (28).

2. The apparatus according to claim 1, **characterised in that** it further comprises a station (11) for punching the profile (5) to make features in the profile (5) forming at least a part of the locking and/or operating elements (3).

3. The apparatus according to claim 1, **characterised in that** it further comprises a station (12) for separating or cutting the profile (5) to a predetermined length in order to form the operating rod (1).

4. The apparatus according to claims 1 to 3, **characterised in that** the apparatus (100) comprises the following, one after the other in the working direction (A): the feed station (4); the punching station (11); the perforating station (6); the separating or cutting station (12); the fixing station (10); and the station (7) for inserting the pins (8).

5. The apparatus according to claims 1 to 3, **characterised in that**, the punching station (11) and the separating station (12) too consist of a lower unit (15) for positioning and moving the profile (5) and the pins (8) and a corresponding plurality of working means (16) located above a surface on which the profile (5) is fed in the direction (A) and opposite the lower unit (15).

6. The apparatus according to claim 5, **characterised in that** the feed station (4) comprises a guide (21) for the passage of the profile (5) fed in by a cartridge (22), and a pair of power-driven opposing rollers (23) located upstream of the guide (21) in the working direction (A) and between which the profile (5) to be fed to the other stations (11, 6, 12, 10, 7) is interposed.

7. The apparatus according to claim 6, **characterised in that** the profile (5) is of the continuous type, and is rolled up on the cartridge (22) outside the apparatus (100).

8. The apparatus according to claim 5, **characterised in that** the punching station (11) comprises a first vertical bit (16a) associated with drive means (24) and mobile towards and away from the matrix (18) which, at the working area of the first bit (16a), has an opening (25) on the central channel (20), this opening being shaped to match the shape of the cutting edge of the first bit (16a) so that the latter, when activated, forms a tapered feature (26) on the profile (5) constituting a stop and operating element on the rod (1).

9. The apparatus according to claim 5, **characterised in that** the perforating station (6) comprises a second vertical bit (16b) with circular cross section, associated with drive means (24) and mobile towards and away from the matrix (18) which, at the working area of the second bit (16b), has a circular opening (27), which, when the second bit (16b) is activated, makes a circular hole (9) through the profile (5).

10. The apparatus according to claim 5, **characterised in that** the insertion station (7) comprises:
- drive means (29) for moving the pin (8) vertically from a lowered working position to a raised position where the pin (8) itself is inserted into a hole (9) made in the profile (5) and positioned above the pin (8).

11. The apparatus according to claim 10, **characterised in that** the vertical drive means (29) comprise a pushing cylinder (29c) located under a base plate (32) of the apparatus (100) and mobile between a retracted idle position where the cylinder (29c) is under the base plate (32), and a raised working position with the pin (8) on it in such manner as to insert the pin (8) into a hole (9) in the profile (5).

12. The apparatus according to claim 5, **characterised in that** the fixing station (10) comprises a third vertical bit (16c) associated with drive means (24) and mobile towards and away from the matrix (18) which, at the working area of the third bit (16c), has an open slot-like seat (33) forming a passage that supports the pin (8) in a respective hole (9) in the profile (5) downstream of the fixing station (10) in the working direction (A); the third bit (16c) having a wedge-shaped working edge enabling the pin (8) to be fixed in place by deforming a part (8a) of it when the profile (5) is withdrawn from the insertion station (7) to the fixing station (10).

13. The apparatus according to claim 10, **characterised in that** the open slot-like seat (28) in the matrix (18) has an undercut (28s) made in the edge of the seat (28) itself and designed to support the bottom of the pin (8) during withdrawal from the insertion station (7) to the fixing, station (10).

14. The apparatus according to claim 5, **characterised in that** the cutting station (12), located between the perforating station (6) and the fixing station (10), comprises a fourth vertical cutting bit (16d) associated with drive means (24) and mobile towards and away from the matrix (18) which, at the working area of the fourth bit (16d), has a slot-like seat (34) extending transversally to the working direction (A) and designed to separate the part of the profile (5) forming a finished rod (1) from the remaining portion of the continuous profile (5).

15. The apparatus according to claim 5, **characterised in that** the means (16) for working the continuous profile (5) comprise a plurality of bits (16a, 16b, 16c, 16d) driven by means (24) comprising a single actuating element (35) which moves the bits (16a, 16b, 16c, 16d) up and down; there being, between each of the bits (16a, 16b, 16c, 16d) and the actuator (35), interposed blocks (36) for selectively moving the bits (16a, 16b, 16c, 16d) individually, through a drive control unit (37), between a selected working position in which the block (36) pushes the respective, bit (16a, 16b, 16c, 16d) so that the bit (16a, 16b, 16c, 16d) performs a working movement towards the profile (5), and a selected idle position in which the block (36) positions at the respective bit (16a, 16b, 16c, 16d) a matching seat (37s) through which the bit (16a, 16b, 16c, 16d) can slide freely.

16. The apparatus according to claim 10, **characterised in that** the insertion station (7) is equipped with sensor means (38) for detecting the pins (8) at the magazine (13) and at the open seat (28) in the matrix (18).

17. The apparatus according to claim 1, **characterised in that** the magazine (13) consists of a self-contained cylindrical cartridge (13c) containing a plurality of pins (8) placed one after the other, the cylinder (13c) being insertable into a cylindrical fitting (39) made close to the insertion station (7) and designed to position one pin (8) at a time in a zone for extracting the pins (8), which are gravity fed.

18. The apparatus according to claim 17, **characterised in that** the cartridge (13c) consists of a self-contained transparent cylinder having a predetermined number of pins (8) inside it and being replaceable by another similar cartridge (13c) when the pins (8) in the first cartridge (13c) are finished.

## Patentansprüche

1. Vorrichtung zur Herstellung von Zubehörelementen für Tür- oder Fensterrahmen, die ein Profil beinhalten, das einen Kanal für das Gleiten und/oder Einkuppeln zumindest einer Betätigungsstange (1) für eine Griffgruppe bildet, die derart mit Getriebemitteln (2) zusammenwirkt, dass sie das Gleiten der Betätigungsstange (1) in beiden Richtungen entlang des Kanals bewirkt; wobei die Betätigungsstange (1) auch mit Verriegelungs- und/oder Bedienelementen (3) ausgestattet ist, die durch die Griffgruppe betätigt werden; wobei die Vorrichtung Folgendes beinhaltet:
- eine Station (4) für das Zuführen eines Profils (5) in einer Arbeitsrichtung (A), das einen Querschnitt aufweist, der sich genau dem Gleitkanal anpasst;
- eine Station (6) zum Perforieren des Profils (5), um mehrere Löcher im Profil (5) anzufertigen;
wobei die Vorrichtung **dadurch gekennzeichnet ist, dass** sie ferner Folgendes beinhaltet:
- eine Station (7) zum Einsetzen mehrerer Zapfen (8) in entsprechende Löcher (9), die von der Perforierstation (6) im Profil (5) angefertigt wurden;
- eine Station (10) zum Fixieren jedes Zapfens (8) im entsprechenden Loch (9), um ein Getriebeelement (2) oder ein Verriegelungs- und/oder Bedienelement (3) zu bilden;
- ein Magazin (13) für die Zapfen (8) nahe der Einsetzstation (7), das mit Mitteln (14) ausgestattet ist, um die Zapfen (8) einzeln zu entnehmen und der Einsetzstation (7) zuzuführen;
- wobei die Zuführstation (4), die Perforierstation (6), die Fixierstation (10) und die Einsetzstation (7) bestehen aus: einer unteren Einheit (15) zur Positionierung und Bewegung des Profils (5) und der Zapfen (8) sowie aus mehreren entsprechenden Bearbeitungsmitteln (16), die oberhalb einer Fläche, auf der das Profil (5) in Richtung (A) zugeführt wird, und gegenüber der unteren Einheit (15) angeordnet sind;
- wobei die untere Einheit (15) beinhaltet: eine Grundplatte (32), einen Grundschlitten (17) zur Aufnahme einer zwischenliegenden Matrix (18), und ein oberes Element (19) zum Schließen und Führen der Bearbeitungsmittel (16);
- wobei die Entnahme- und Zuführmittel (14) eine kreisförmige Platte (30) aufweisen, die unter der Matrix (18) angeordnet ist und an einem Teil ihres Umfangs eine Vertiefung (31) aufweist, die dazu dient, einen einzelnen Zapfen (8) abzufangen, wenn sich die Platte (30) um ihre vertikale Achse (Z) zwischen einer Entnahmestellung dreht, in der sich die Vertiefung (31) beim Magazin (13) befindet, um den Zapfen (8) abzufangen und zu positionieren, und einer Arbeitsstellung, an der die kreisförmige Platte (30) um einen Winkel (α) gedreht wurde, um den Zapfen (8) zu einer offenen Aufnahme (28) zu bewegen.

2. Vorrichtung nach Anspruch 1, **dadurch gekennzeichnet, dass** sie ferner eine Station (11) zum Stanzen des Profils (5) beinhaltet, um Bearbeitungen an dem Profil (5) auszuführen, die zumindest einen Teil der Verriegelungs- und/oder Bedienelemente (3) bilden.

3. Vorrichtung nach Anspruch 1, **dadurch gekennzeichnet, dass** sie ferner eine Station (12) zum Trennen oder Zuschneiden des Profils (5) auf eine vorbestimmte Länge beinhaltet, um die Betätigungsstange (1) zu bilden.

4. Vorrichtung nach den Ansprüchen 1 bis 3, **dadurch gekennzeichnet, dass** die Vorrichtung (100) nacheinander in Arbeitsrichtung (A) Folgendes beinhaltet: die Zuführstation (4); die Stanzstation (11); die Perforierstation (6); die Trenn- oder Schneidstation (12); die Fixierstation (10); und die Station (7) zum Einsetzen der Zapfen (8).

5. Vorrichtung nach den Ansprüchen 1 bis 3, **dadurch gekennzeichnet, dass** die Stanzstation (11) und die Trennstation (12) ebenfalls bestehen aus: einer unteren Einheit (15) zur Positionierung und Bewegung des Profils (5) und der Zapfen (8) sowie aus mehreren entsprechenden Bearbeitungsmitteln (16), die oberhalb einer Fläche, auf der das Profil (5) in Richtung (A) zugeführt wird, und gegenüber der unteren Einheit (15) angeordnet sind.

6. Vorrichtung nach Anspruch 5, **dadurch gekennzeichnet, dass** die Zuführstation (4) eine Führung (21) für den Durchgang des von einer Ladeeinrichtung (22) zugeführten Profils (5) und ein Paar einander gegenüberliegender kraftbetriebener Rollen (23) beinhaltet, die in Arbeitsrichtung (A) betrachtet stromaufwärts vor der Führung (21) angeordnet sind und zwischen denen das Profil (5) eingelegt ist, um den anderen Stationen (11, 6, 12, 10, 7) zugeführt zu werden.

7. Vorrichtung nach Anspruch 6, **dadurch gekennzeichnet, dass** das Profil (5) endloser Art ist und auf der Ladeeinrichtung (22) außerhalb der Vorrichtung (100) aufgerollt ist.

8. Vorrichtung nach Anspruch 5, **dadurch gekennzeichnet, dass** die Stanzstation (11) ein erstes vertikales Stanzwerkzeug (16a) beinhaltet, das mit Antriebseinrichtungen (24) verbunden ist und zu der Matrix (18) hin und von dieser weg bewegt werden kann, welche in dem Arbeitsbereich des ersten Stanzwerkzeuges (16a) eine Öffnung (25) auf dem mittleren Kanal (20) aufweist, wobei diese Öffnung so geformt ist, dass sie der Form der Schneidkante des ersten Stanzwerkzeuges (16a) entspricht, so dass das letztgenannte bei seiner Aktivierung eine konisch zulaufende Bearbeitung (26) auf dem Profil (5) ausformt, die ein Anschlag- und Bedienelement auf der Stange (1) bildet.

9. Vorrichtung nach Anspruch 5, **dadurch gekennzeichnet, dass** die Perforierstation (6) ein zweites vertikales Stanzwerkzeug (16b) mit kreisförmigem Querschnitt beinhaltet, das mit Antriebseinrichtungen (24) verbunden ist und zu der Matrix (18) hin und von dieser weg bewegt werden kann, welche in dem Arbeitsbereich des zweiten Stanzwerkzeuges (16b) eine kreisförmige Öffnung (27) aufweist, welche bei Aktivierung des zweiten Stanzwerkzeuges (16b) ein kreisförmiges Loch (9) durch das Profil (5) anfertigt.

10. Vorrichtung nach Anspruch 5, **dadurch gekennzeichnet, dass** die Einsetzstation (7) Folgendes beihaltet:
- Antriebseinrichtungen (29) zum vertikalen Bewegen des Zapfens (8) von einer unteren Arbeitsstellung in eine angehobene Stellung, in der der Zapfen (8) in en Loch (9) eingesetzt wird, das im Profil (5) angefertigt und über dem Zapfen (8) angeordnet ist.

11. Vorrichtung nach Anspruch 10, **dadurch gekennzeichnet, dass** die vertikalen Antriebseinrichtungen (29) einen Schubzylinder (29c) beinhalten, der unter einer Grundplatte (32) der Vorrichtung (100) angeordnet ist und beweglich ist zwischen einer zurückgezogenen Ruhestellung, in der sich der Zylinder (29c) unterhalb der Grundplatte (32) befindet, und einer angehobenen Arbeitsstellung, wobei der Zapfen (8) so darauf angeordnet ist, dass der Zapfen (8) in ein Loch (9) in dem Profil (5) eingeführt wird.

12. Vorrichtung nach Anspruch 5, **dadurch gekennzeichnet, dass** die Fixierstation (10) ein drittes vertikales Stanzwerkzeug (16c) beinhaltet, das mit Antriebseinrichtungen (24) verbunden ist und zu der Matrix (18) hin und von dieser weg bewegt werden kann, welche in dem Arbeitsbereich des dritten Stanzwerkzeuges (16c) eine offene langlochförmige Aufnahme (33) aufweist, die einen Durchgang zum Halten des Zapfens (8) bildet, der in einem entsprechenden Loch (9) in dem Profil (5) und in Arbeitsrichtung (A) betrachtet stromabwärts nach der Fixierstation (10) angeordnet ist; wobei das dritte Stanzwerkzeug (16c) eine keilförmige Arbeitskante aufweist, die das Fixieren des Zapfens (8) in seiner Stellung durch Verformen eines Teils (8a) des Zapfens beim Zurückziehen des Profils (5) von der Einsetzstation (7) zu der Fixierstation (10) ermögücht.

13. Vorrichtung nach Anspruch 10, **dadurch gekennzeichnet, dass** die offene langlochförmige Aufnahme (28) in der Matrix (18) eine Hinterschneidung (28s) aufweist, die in der Kante der Aufnahme (28) ausgefertigt ist und als Auflage für die Unterseite des Zapfens (8) während des Zurückziehens von der Einsetzstation (7) zu der Fixierstation (10) dient.

14. Vorrichtung nach Anspruch 5, **dadurch gekennzeichnet, dass** die Schneidstation (12), die zwischen der Perforierstation (6) und der Fixierstation (10) angeordnet ist, eine viertes vertikales Stanzwerkzeug (16d) zum Schneiden beinhaltet, das mit Antriebseinrichtungen (24) verbunden ist und zu der Matrix (18) hin und von dieser weg bewegt werden kann, welche in dem Arbeitsbereich des vierten Stanzwerkzeuges (16d) eine langlochförmige Aufnahme (34) aufweist, die sich quer zur Arbeitsrichtung (A) erstreckt und dazu dient, den Teil des Profils (5), der eine fertiggestellte Stange (1) bildet, von dem restlichen Teil des endlosen Profils (5) abzutrennen.

15. Vorrichtung nach Anspruch 5, **dadurch gekennzeichnet, dass** die Einrichtungen (16) zur Bearbeitung des endlosen Profils (5) mehrere Werkzeuge (16a, 16b, 16c, 16d) beinhalten, die von Einrichtungen (24) angetrieben werden, die ein einziges Betätigungselement (35) beinhalten, welches die Werkzeuge (16a, 16b, 16c, 16d) auf- und abwärts bewegt;
wobei zwischen jedem der Stanzwerkzeuge (16a, 16b, 16c, 16d) und dem Betätigungselement (35) Blöcke (36) angeordnet sind, die dazu dienen, die Stanzwerkzeuge (16a, 16b, 16c, 16d) selektiv und einzeln über eine Antriebssteuereinheit (37) zu bewegen und zwar zwischen einer vorbestimmten Arbeitsstellung, in der der Block (36) derart gegen das entsprechende Stanzwerkzeug (16a, 16b, 16c, 16d) drückt, dass das Stanzwerkzeug (16a, 16b, 16c, 16d) eine Arbeitsbewegung zu dem Profil (5) hin ausführt, und einer vorbestimmten Ruhestellung, in der der Block (36) an dem entsprechenden Stanzwerkzeug (16a, 16b, 16c, 16d) eine passende Aufnahme (37s) positioniert, durch die das Stanzwerkzeug (16a, 16b, 16c, 16d) frei hindurchgleiten kann.

16. Vorrichtung nach Anspruch 10, **dadurch gekennzeichnet, dass** die Einsetzstation (7) mit Sensoreinrichtungen (38) zur Erfassung der Zapfen (8) an dem Magazin (13) und an der offenen Aufnahme (28) in der Matrix (18) ausgestattet ist.

17. Vorrichtung nach Anspruch 1, **dadurch gekennzeichnet, dass** das Magazin (13) aus einer eigenständigen zylindrischen Ladeeinrichtung (13c) besteht, die mehrere hintereinander angeordnete Zapfen (8) enthält, wobei der Zylinder (13c) in ein zylindrisches Anschlussteil (39) eingeführt werden kann, das in der Nähe der Einsetzstation (7) ausgefertigt ist und dazu dient, jeweils einen Zapfen (8) in einem Bereich für die Entnahme der durch Schwerkraftwirkung zugeführten Zapfen (8) anzuordnen.

18. Vorrichtung nach Anspruch 17, **dadurch gekennzeichnet, dass** die Ladeeinrichtung (13c) aus einem eigenständigen transparenten Zylinder besteht, der eine vorbestimmte Anzahl von Zapfen (8) enthält und durch eine andere, ähnliche Ladeeinrichtung (13c) ersetzt werden kann, wenn die Zapfen (8) in der ersten Ladeeinrichtung (13c) aufgebraucht sind.

## Revendications

1. Un dispositif pour la fabrication d'éléments accessoires pour des châssis de porte ou de fenêtre comprenant un profilé constituant un canal dans lequel coulisse et/ou est accouplée au moins une tige de manoeuvre (1) pour un ensemble de poignée qui coopère avec des moyens d'entraînement (2) pour faire coulisser ladite tige de manoeuvre (1) dans les deux sens le long du canal ; la tige de manoeuvre (1) étant également dotée d'éléments (3) de blocage et/ou de manoeuvre, actionnés par l'ensemble de poignée ; tel dispositif comprenant :
- une station (4) servant à alimenter un profilé (5) dans une direction opérationnelle (A) et ayant une section qui définit un accouplement complémentaire avec le canal de coulissement ;
- une station (6) servant à percer le profilé (5) pour réaliser une pluralité de trous dans ledit profilé (5) ;
le dispositif étant **caractérisé en ce qu'**il comprend en outre :
- une station (7) servant à introduire une pluralité de broches (8) dans des trous (9) respectifs réalisés dans le profilé (5) par la station de perçage (6) ;
- une station (10) servant à fixer chaque broche (8) dans le trou (9) respectif pour former un élément d'entraînement (2) ou un élément (3) de blocage et/ou de manoeuvre ;
- un magasin (13) destiné aux broches (8), situé à proximité de la station d'introduction (7) et équipé de moyens (14) destinés à extraire les broches (8) une par une et à les alimenter à la station d'introduction (7) ;
- la station d'alimentation (4), la station de perçage (6), la station de fixation (10) et la station d'introduction (7) consistant en un groupe inférieur (15) servant à positionner et à mouvoir le profilé (5) et les broches (8) et en une pluralité correspondante de moyens opérationnels (16) situés au-dessus d'une surface d'avancement du profilé (5) dans la direction (A) et à l'opposé du groupe inférieur (15) ;
- le groupe inférieur (15) comprenant une plaque de base (32), un berceau de base (17) logeant une matrice intermédiaire (18), et un élément supérieur (19) de fermeture et de guidage desdits moyens opérationnels (16) ;
- les moyens (14) d'extraction et d'alimentation comprenant une plaque circulaire (30) située sous la matrice (18) et présentant, sur une partie de sa circonférence, une indentation (31) destinée à intercepter une broche (8) individuelle quand la plaque (30) tourne autour de son axe vertical (Z) entre une position d'extraction dans laquelle l'indentation (31) est au niveau du magasin (13) pour saisir et positionner la broche (8), et une position opérationnelle dans laquelle la plaque circulaire (30) a été tournée d'un angle (α) pour amener la broche (8) dans un logement ouvert (28).

2. Le dispositif selon la revendication 1, **caractérisé en ce qu'**il comprend en outre une station (11) servant à poinçonner le profilé (5) pour exécuter des usinages dans le profilé (5) constituant au moins une partie des éléments (3) de blocage et/ou de manoeuvre.

3. Le dispositif selon la revendication 1, **caractérisé en ce qu'**il comprend en outre une station (12) servant à séparer ou couper le profilé (5) à une longueur prédéfinie pour former la tige de manoeuvre (1).

4. Le dispositif selon les revendications de 1 à 3, **caractérisé en ce que** le dispositif (100) comprend ce qui suit, disposées l'une après l'autre dans la direction opérationnelle (A) : la station d'alimentation (4) ; la station de poinçonnage (11) ; la station de perçage (6) ; la station de séparation ou de coupe (12) ; la station de fixation (10) ; et la station (7) d'introduction des broches (8).

5. Le dispositif selon les revendications de 1 à 3, **caractérisé en ce que** la station de poinçonnage (11) et la station de séparation (12) consistent, elles aussi, en un groupe inférieur (15) servant à positionner et à mouvoir le profilé (5) et les broches (8) et en une pluralité correspondante de moyens opérationnels (16) situés au-dessus d'une surface d'avancement du profilé (5) dans la direction (A) et à l'opposé du groupe inférieur (15).

6. Le dispositif selon la revendication 5, **caractérisé en ce que** la station d'alimentation (4) comprend un guide (21) pour le passage du profilé (5) alimenté par un chargeur (22), et une paire de rouleaux (23) opposés et motorisés, situés en amont du guide (21) dans la direction opérationnelle (A) et entre lesquels le profilé (5) à alimenter aux autres stations (11, 6, 12, 10, 7) est interposé.

7. Le dispositif selon la revendication 6, **caractérisé en ce que** le profilé (5) est de type continu et est enroulé sur le chargeur (22) à l'extérieur du dispositif (100).

8. Le dispositif selon la revendication 5, **caractérisé en ce que** la station de poinçonnage (11) comprend un premier poinçon vertical (16a) associé à des moyens d'entraînement (24) et mobile vers et à l'opposé de la matrice (18) qui, au niveau de la zone opérationnelle du premier poinçon (16a), présente une ouverture (25) sur le canal central (20), cette ouverture étant conformée pour correspondre de façon complémentaire à la forme du bord tranchant du premier poinçon (16a) de manière à ce que ce dernier, quand activé, forme une extrémité amincie (26) sur le profilé (5) constituant un élément d'arrêt et de manoeuvre de la tige (1).

9. Le dispositif selon la revendication 5, **caractérisé en ce que** la station de perçage (6) comprend un deuxième poinçon vertical (16b) de section circulaire, associé à des moyens d'entraînement (24) et mobile vers et à l'opposé de la matrice (18) qui, au niveau de la zone opérationnelle du deuxième poinçon (16b), présente une ouverture circulaire (27) qui, quand le deuxième poinçon (16b) est activé, permet la réalisation d'un trou circulaire (9) à travers le profilé (5).

10. Le dispositif selon la revendication 5, **caractérisé en ce que** la station d'introduction (7) comprend :
- des moyens d'entraînement (29) destinés à mouvoir la broche (8) verticalement d'une position opérationnelle basse à une position haute où la broche (8) elle-même est introduite dans un trou (9) réalisé dans le profilé (5) et situé au-dessus de la broche (8).

11. Le dispositif selon la revendication 10, **caractérisé en ce que** les moyens (29) d'entraînement vertical comprennent un cylindre de poussée (29c) situé sous une plaque de base (32) du dispositif (100) et mobile entre une position rentrée de repos dans laquelle le cylindre (29c) est sous la plaque de base (32), et une position sortie opérationnelle avec la broche (8) en appui de manière à introduire la broche (8) elle-même dans un trou (9) du profilé (5).

12. Le dispositif selon la revendication 5, **caractérisé en ce que** la station de fixation (10) comprend un troisième poinçon vertical (16c) associé à des moyens d'entraînement (24) et mobile vers et à l'opposé de la matrice (18) qui, au niveau de la zone opérationnelle du troisième poinçon (16c), présente un logement (33) en forme de fente ouverte définissant un passage pour le support de la broche (8) dans un trou (9) respectif du profilé (5) en aval de la station de fixation (10) dans la direction opérationnelle (A) ; le troisième poinçon (16c) ayant un bord opérationnel en forme de coin qui permet la fixation de la broche (8) par déformation d'une partie (8a) de celle-ci lors du retrait du profilé (5) de la station d'introduction (7) à la station de fixation (10).

13. Le dispositif selon la revendication 10, **caractérisé en ce que** le logement (28) en forme de fente ouverte de la matrice (18) présente une contre-dépouille (28s) réalisée dans le bord du logement (28) lui-même et destinée à supporter la partie inférieure de la broche (8) lors du retrait de la station d'introduction (7) à la station de fixation (10).

14. Le dispositif selon la revendication 5, **caractérisé en ce que** la station de coupe (12), située entre la station de perçage (6) et la station de fixation (10), comprend un quatrième poinçon vertical (16d) de coupe, associé à des moyens d'entraînement (24) et mobile vers et à l'opposé de la matrice (18) qui, au niveau de la zone opérationnelle du quatrième poinçon (16d), présente un logement (34) en forme de fente s'étendant transversalement à la direction opérationnelle (A) et destiné à séparer la partie du profilé (5) formant une tige (1) finie de la partie restante du profilé continu (5).

15. Le dispositif selon la revendication 5, **caractérisé en ce que** les moyens (16) servant à l'usinage du profilé continu (5) comprennent une pluralité de poinçons (16a, 16b, 16c, 16d) mus par des moyens (24) comprenant un élément d'actionnement (35), unique, qui déplace les poinçons (16a, 16b, 16c, 16d) verticalement ; des blocs (36) étant interposés entre chacun des poinçons (16a, 16b, 16c, 16d) et l'actionneur (35) pour déplacer sélectivement et individuellement les poinçons (16a, 16b, 16c, 16d), par l'intermédiaire d'une unité de contrôle et d'entraînement (37), entre une position opérationnelle sélectionnée dans laquelle le bloc (36) pousse le poinçon (16a, 16b, 16c, 16d) respectif de manière à ce que ledit poinçon (16a, 16b, 16c, 16d) effectue une course opérationnelle vers le profilé (5), et une position de repos sélectionnée dans laquelle le bloc (36) positionne au niveau du poinçon (16a, 16b, 16c, 16d) respectif un logement complémentaire (37s) à travers lequel le poinçon (16a, 16b, 16c, 16d) peut coulisser librement.

16. Le dispositif selon la revendication 10, **caractérisé en ce que** la station d'introduction (7) est équipée de moyens capteurs (38) servant à détecter les broches (8) au niveau du magasin (13) et au niveau du logement ouvert (28) de la matrice (18).

17. Le dispositif selon la revendication 1, **caractérisé en ce que** le magasin (13) consiste en un chargeur cylindrique (13c) indépendant contenant une pluralité de broches (8) disposées l'une après l'autre, le cylindre (13c) pouvant être introduit dans un accouplement cylindrique (39) réalisé à proximité de la station d'introduction (7) et destiné à positionner une broche (8) à la fois dans une zone d'extraction des broches (8), ces dernières étant alimentées par gravité.

18. Le dispositif selon la revendication 17, **caractérisé en ce que** le chargeur (13c) consiste en un cylindre transparent indépendant contenant un nombre prédéfini de broches (8) et pouvant être remplacé par un autre chargeur (13c) analogue quand il n'y a plus de broches (8) dans le premier chargeur (13c).
